# EUROPÄISCHE PATENTSCHRIFT

(11) **EP 2 721 974 B1**
(45) Veröffentlichungstag und Bekanntmachung des Hinweises auf die Patenterteilung: **27.05.2015**
(21) Anmeldenummer: 12401209.7
(22) Anmeldetag: 17.10.2012
(51) Int. Cl.: A47J 31/44

(54) **Getränkebereiter**
Beverage preparation machine
Préparateur de boissons

(43) Veröffentlichungstag der Anmeldung: 23.04.2014
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 2 253 253
- EP-A2- 0 395 564
- WO-A1-2006/003128
- WO-A1-2012/113106
- FR-A1- 2 621 804
- Nestlé: "Néstle Solution 8/60 Beverage System Operations Manual", 31. August 2010 (2010-08-31), Nestlé Professional, XP007921572, * Seite 3; Abbildung 3 * * Seite 6; Abbildung 10 *
- DLENGHI: "Kaffeevollautomaten Magnifica II - ESAM 3000 B", 20070312 , 12. März 2007 (2007-03-12), XP007910120, Gefunden im Internet: URL:http://www.delonghi.com [gefunden am 2013-05-07]

## Beschreibung

Die Erfindung betrifft einen Getränkebereiter nach dem Oberbegriff des Patentanspruches 1.

Getränkebereiter der hier betroffenen Art sind in Form eines Standgerätes beispielsweise als Kaffeeautomaten in vielfältigen Ausführungsvarianten im Einsatz. Unter einem "Standgerät" wird dabei ein frei stehendes Einzelgerät verstanden, dass folglich nicht in einen Schrank eingebaut ist. Das Gehäuse derartiger Getränkebereiter besteht unter anderem aus einer Vielzahl einzelner Verkleidungsteile, die aus gestalterischen Gründen mit einer farbigen Lackoberfläche versehen sind oder insgesamt aus einem farbigen Kunststoff bestehen können. Es ist vorstellbar, dass dem Gehäuse eine wesentliche gestalterische Bedeutung für den Getränkebereiter zukommt. Das Gehäuse ist auf einen Boden aufgesetzt, der einem sicheren Stand des Getränkebereiters dient und hierzu an seiner Unterseite Standfüße aufweisen kann. Ebenso ist es bekannt, an dem Borden einzelne Bedienelemente, wie beispielsweise Schalter, vorzusehen.

Um Wartungs- oder Reparaturarbeiten an einem derartigen Getränkebereiter durchführen zu können, ist es ebenfalls bekannt, einzelne dieser Verkleidungsteile lösbar an dem Gehäuse anzuordnen, wobei die lösbare Verbindung zum Beispiel aus Klemmverbindungen, Schnappverbindungen oder Schraubverbindungen besteht. Eine andere Möglichkeit, an die inneren Bauelemente eines derartigen Getränkebereiters heranzukommen, besteht darin, einzelne Türen vorzusehen, die nach ihrem Öffnen die dahinter liegenden Bauteile freigegeben.

Ein ganz wesentlicher Nachteil derartiger Türen besteht jedoch darin, dass die mit den Türen ausgestatteten Verkleidungsteile optisch unterbrochen werden, worunter die gesamte Gestaltung des Getränkebereiters leidet, da die Umrisslinien der Türen oder Klappen sichtbar sind. Je mehr derartige Türen an einem Getränkebereiter vorgesehen werden, umso größer ist zudem die Gefahr, dass einzelne dieser Türen einen Defekt aufweisen und beispielsweise nicht mehr korrekt schließen, so dass hier ein Austausch vorgenommen werden muss. Zudem ist aufgrund der Unterbrechungen in den Verkleidungsteilen auch immer die Problematik gegeben, dass diese Verkleidungsteile eine geringere Stabilität aufweisen, als nicht unterbrochene Verkleidungsteile. Um dem entgegenzuwirken, müssen folglich konstruktive Maßnahmen ergriffen werden, die die Stabilität dieser Verkleidungsteile erhöhen. Darüber hinaus besteht auch ein nicht unerhebliches Risiko zusätzlicher Verschmutzungen, die sich an den offenen Umrisslinien der in den Verkleidungsteilen vorhandenen Türen ansammeln.

Aus der EP 0 395 564 A2 ist ein als Kaffeemaschine ausgebildeter Getränkebereiter bekannt, der einen Bodenteil mit darauf angeordnetem Gehäuse umfasst. Die Seitenteile können aufgeschwenkt werden, um einen Zugang zum Gehäuseinneren bereitzustellen. Die die seitlichen, verschwenkbaren Klappen liegen mit ihrer unteren Kante auf dem Bodenteil auf, sodass im geschlossenen Zustand stets ein Spalt im zugänglichen Bereich vorhanden ist.

Aus der FR 2 621 804 A1 ist ein hinsichtlich der Gehäusekonstruktion ähnlich aufgebauter Getränkebereiter bekannt, bei dem die Seitenteile in die vorgesehene Position eingeschoben werden können, wobei die Führung in bodenseitigen Nuten bzw. rahmenseitigen Schienen bereitgestellt wird.

Aus der WO 2006/003128 A1 oder dem Dokument "Nestle Solution 8/60 Beverage System Operations Manual" ist ein Kaffeevollautomat bekannt, bei der die Frontpartie mit einer Vielzahl von Funktionskomponenten, wie Getränkeauslauf, Dampfdüse, Bedienungseinrichtung aufgeschwenkt werden kann, um im Inneren die die Leitungen oder Mischkammern zum Reinigen zu erreichen.

Aus der EP 2 253 253 A1 ist ein Kaffeevollautomat bekannt, der an der Unterseite des Bodenteils eine Anformung umfasst, sodass bei betriebsgemäßer Aufstellposition der seitliche Rand des Bodenteils beabstandet zur Aufstellfläche positioniert ist.

Der Erfindung stellt sich somit das Problem, einen Getränkebereiter zur Verfügung zu stellen, der einen möglichst einheitlichen optischen Eindruck hinterlässt und möglichst wenig sichtbare Öffnungen seines Gehäuses aufweist.

Erfindungsgemäß wird dieses Problem durch ein mit den technischen Merkmalen des Patentanspruches 1 gelöst.

Vorteilhafte Ausgestaltungen und Weiterbildungen der Erfindung ergeben sich aus den nachfolgenden Unteransprüchen.

Ein Getränkebereiter in Form eines Standgerätes, mit einem auf einen Boden aufgesetzten Gehäuse, das mehrere Verkleidungsteile und mindestens eine Tür aufweist, wurde erfindungsgemäß dahingehend weitergebildet, dass zumindest eines dieser Verkleidungsteile eine insgesamt als Tür ausgebildete Seitenwand des Getränkebereiters ist.

Mit anderen Worten besteht die vorgeschlagene Lösung darin, eine komplette Seitenwand als eine Tür auszubilden, hinter der sich Einrichtungsteile, Aggregate oder Bauelemente des Getränkebereiters befinden, auf die ein Zugriff erforderlich oder gewünscht ist.

Die mit der Erfindung erreichbaren Vorteile bestehen neben der Reduzierung der Einzelteile und einem damit reduzierten Fertigungsaufwand, hieraus folgenden, verringerten Herstellungskosten sowie einer verminderten Verschleißanfälligkeit auch darin, dass die Verschmutzungsrisiken gesenkt werden können. Zudem bietet ein derartig ausgestatteter Getränkebereiter einen optisch sehr ansprechenden und einheitlichen Gesamteindruck.

Eine erste Ausgestaltung der Erfindung besteht darin, die als Servicetür dienende Tür in vertikaler Richtung betrachtet, zumindest teilweise über den Boden hinaus ragen zu lassen, was bedeutet, dass die Tür den Boden zumindest teilweise verdeckend ausgeführt ist. An dieser Stelle muss betont werden, dass natürlich nicht nur die als Tür ausgeführte Seitenwand, sondern passend hierzu auch die übrigen Verkleidungsteile den Boden analog überdecken. Dies hat zur Folge, dass der Gesamteindruck des Getränkebereiters optisch einheitlich und ansprechend gestaltet ist, wobei von dem Boden relativ wenig erkennbar bleibt. Das Gehäuse ist folglich haubenartig auf den Boden aufgesetzt.

Da es sich bei dem Getränkebereiter nach der Erfindung um ein einzelnes Standgerät handelt, ist es nachvollziehbar, dass der Getränkebereiter in Abhängigkeit seines Gewichtes transportabel ist, so dass er ortsveränderlich aufgestellt werden kann. Zur Erleichterung des Transportes ist es daher von Vorteil, wenn zumindest auf zwei einander gegenüber liegenden Seiten des Bodens je eine Griffmulde in den Boden eingebracht ist.

Ein weiterführender Gedanke dieses Vorschlages geht dahin, dass die Griffmulden durch je eine verschwenkbare Klappe abgedeckt sind. Diese Maßnahme trägt in entscheidendem Maße dazu bei, einen optisch einheitlichen Gesamteindruck des Getränkebereiters zu erzeugen und zudem unnötige Vertiefungen in der Oberfläche des Gehäuses oder des Bodens zu vermeiden. Um die Zugänglichkeit zu der Griffmulde weiterhin zu gewährleisten, sind die Klappen verschwenkbar ausgeführt. Eine besonders einfache Lösungsmöglichkeit der Verschwenkbarkeit besteht darin, die Klappen scharnierartig um eine Achse schwenkbar in dem Gehäuse oder am Boden zu lagern.

Um den Getränkebereiter möglichst ohne erheblichen Aufwand transportieren zu können, ist es von Vorteil, wenn die Griffmulden beziehungsweise die Klappen als Tragegriffe ausgebildet sind. Werden die Griffmulden als Tragegriffe ausgebildet, so bedeutet dies im erfindungsgemäßen Sinne, das die Griffmulden eine ergonomisch günstig gestaltete Geometrie aufweisen. Hierbei ist zum Beispiel daran gedacht die Griffmulden mit einer Kontur auszustatten, die den Fingern einer menschlichen Hand nachgebildet ist und folglich abgerundete Erhebungen und Vertiefungen im Wechsel, also allgemeiner gesagt, eine wellenförmige Gestalt, aufweist. Die Klappen, welche zum Einsatz kommen, um die Griffmulden optisch abzudecken, können einerseits nach innen, also in die Griffmulde hinein oder nach außen, also aus der Griffmulde heraus geschwenkt werden. Insbesondere die zuletzt genannte Variante bietet den Vorteil, die Klappen als Tragegriffe einzusetzen. Natürlich kann auch hierbei eine ergonomisch günstige Gestaltung der Innenkontur der Klappen vorgesehen werden.

Von besonderem Vorteil ist es darüber hinaus, wenn entsprechend einem weiteren Vorschlag nach der Erfindung die Klappen durch die Kraft wenigstens einer Feder selbsttätig in ihre Ausgangsstellung bewegbar ausgeführt sind. Dies bedeutet, dass nach dem Loslassen der Klappen die Griffmulden durch die Kraft der erwähnten Feder wieder verschlossen werden. Anders ausgedrückt muss die Klappe zum Eingriff in die Griffmulde zunächst gegen die Kraft der Feder verschwenkt werden, um die Griffmulde zugänglich zu machen und den Getränkebereiter transportieren zu können.

Dem Gedanken folgend, die gesamte Gestaltung des Getränkebereiters möglichst optisch einheitlich auszuführen, wird darüber hinaus vorgeschlagen, dass die Verkleidungsteile mit einer Lackoberfläche versehen sind.

Folgerichtig ist es auch von Vorteil, wenn die Klappen mit einer zum Boden und/oder zu den Verkleidungsteilen identischen Lackoberfläche versehen sind.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: die Darstellung eines Getränkebereiters in einer räumlichen Ansicht,
- Figur 2:: die Ansicht des Getränkebereiters aus Figur 1 mit einer geöffneten Tür,
- Figur 3:: den Bereich einer Griffmulde mit nach innen geschwenkter Klappe
und
- Figur 4:: den Bereich einer Griffmulde mit nach außen geschwenkter Klappe.

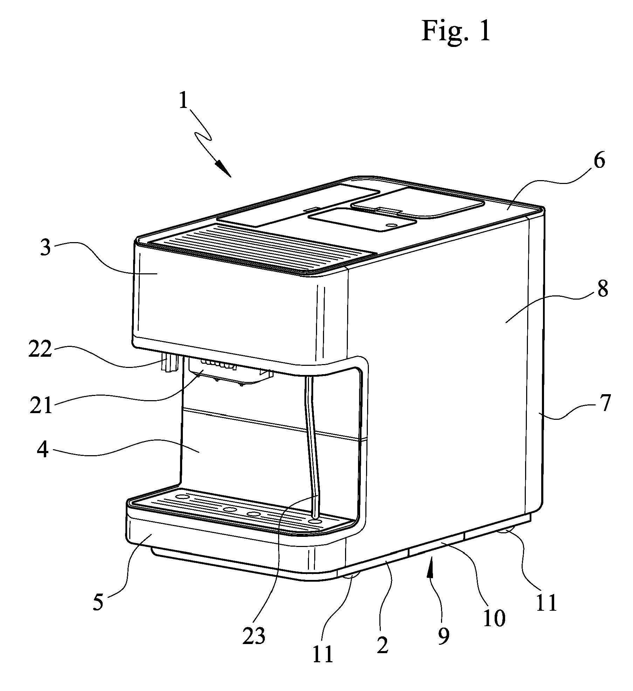

Die Figur 1 zeigt einen Getränkebereiter 1 in einer räumlichen Perspektive, dessen aus mehreren Verkleidungsteilen 3, 4, 5, 6, 7, 8 bestehendes Gehäuse haubenartig auf einen Boden 2 aufgesetzt ist. Dabei überdecken die Verkleidungsteile 3, 4, 5, 6, 7, 8 den Boden 2 in vertikaler Richtung so weit, dass dieser nahezu unsichtbar ist. Der gesamte Getränkebereiter 1 bietet dadurch ein optisch sehr einheitliches Gesamtbild, was auch durch die erfindungsgemäße Verwendung möglichst weniger, das Gehäuse bildender Einzelteile verstärkt wird.

Bei dem Verkleidungsteil 3 handelt es sich um eine Abdeckung eines oberen Vorbaus des Getränkebereiters 1, während das Verkleidungsteil 5 eine Blende eines unteren Vorbaus des Getränkebereiters 1 darstellt. Das Verkleidungsteil 4 ist darüber hinaus zwischen dem oberen und dem unteren Vorbau angeordnet und dient gleichzeitig als Spritzschutz für eventuell verspritzende Flüssigkeiten bei der Entnahme eines Getränkes aus einer der unterhalb des oberen Vorbaus angeordneten Entnahmeeinrichtungen, von denen in der Figur 1 lediglich einen Getränkeauslauf 21 zur Ausgabe eines Kaffeegetränkes oder eines Kaffee-Mischgetränkes und eine Heißwasserdüse 22 zur Abgabe heißen Wassers dargestellt sind. Die Heißwasserdüse 22 kann in an sich bekannter Weise zur Erzeugung von Heißwassergetränken, wie Tee, Brühe oder Instantgetränken dienen.

Neben dem Getränkeauslauf 21 ist bei der in Figur 1 dargestellten Ausführungsvariante eines Getränkebereiters 1 ein Milchschlauch 23 angeordnet, der als flexibler Schlauch ausgeführt ist und beispielsweise in einen Milchbehälter eingeführt werden kann, um daraus die für die Zubereitung von Getränken benötigte Milch abzusaugen.

Darüber hinaus weist das Gehäuse ein an der Oberseite angeordnetes Verkleidungsteil 6 auf, dass die Decke des Getränkebereiters 1 bildet. Dieses Verkleidungsteil 6 dient beispielsweise dem Einsetzen eines nicht näher bezeichneten, jedoch in der Zeichnung angedeuteten Wasserbehälters. Es weist mehrere Deckel für unterschiedliche Zwecke auf. Im Bereich des Vorbaus nimmt das Verkleidungsteil 6 ferner ein Abluftgitter auf, das in der Figur 1 jedoch ebenfalls nicht näher bezeichnet ist. Schließlich verfügt das Gehäuse noch über ein weiteres Verkleidungsteil 7, dass im vorliegenden Fall die Rückwand des Getränkebereiters 1 bildet.

Die Besonderheit bei dem in Figur 1 gezeigten Getränkebereiter besteht darin, dass eines der Verkleidungsteile eine insgesamt als eine Tür 8 ausgebildete Seitenwand 8 des Getränkebereiters 1 ist.

Der Boden 2 des Getränkebereiters 1 verfügt über mehrere Standfüße 11, die beispielsweise aus einem elastischen Werkstoff, wie Gummi, hergestellt sind, so dass sie Schwingungen dämpfen und einen sicheren Stand des Getränkebereiters 1 gewährleisten.

Im Bereich der Seitenwände sind in den Boden 2 Griffmulden 9 eingebracht, die jeweils durch eine Klappe 10 abgedeckt sind, wobei die Klappe 10 um eine Achse schwenkbar gelagert ist, so dass nach dem Verschwenken der Klappe 10 ein Eingriff in die Griffmulde 9 möglich ist. Die Griffmulde 9 dient damit der Erleichterung des Transportes des Getränkebereiters 1. In der Figur 1 ist nur eine derartige Griffmulde 9 mit einer Klappe 10 dargestellt. Es bedarf keiner besonderen Erwähnung, dass auf der gegenüberliegenden Seite des Getränkebereiters 1 eine ebensolche Griffmulde 9 mit einer Klappe 10 vorhanden ist.

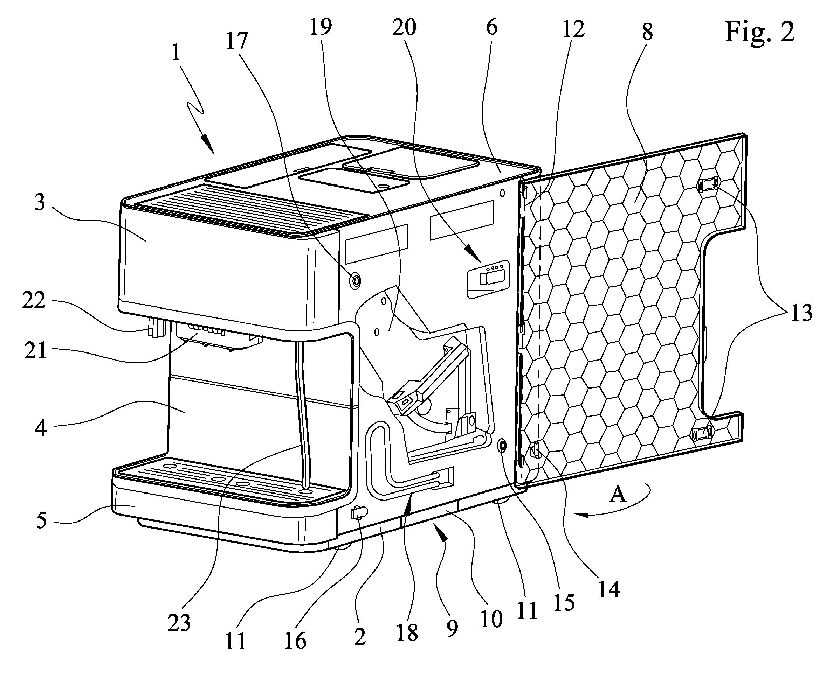

Aus der Figur 2 geht der im Zusammenhang mit der Beschreibung der Figur 1 erläuterte Getränkebereiter 1, jedoch mit geöffneter Tür 8 hervor. Die geöffnete Tür 8 erlaubt einen Blick in das Innenleben des Getränkebereiters 1, wobei die Schließrichtung der Tür 8 durch den Pfeil "A" angedeutet wurde. Zunächst ist zu bemerken, dass die Innenseite der aus einem Kunststoff hergestellten und die gesamte Seitenwand des Getränkebereiters 1 bildenden Tür 8 zur Verstärkung mit einer wabenartigen Struktur ausgestattet ist. Die Tür 8 ist um eine Achse 12 schwenkbar mit dem Gehäuse des Getränkebereiters 1 verbunden. Zur Fixierung der Tür 8 im geschlossenen Zustand dienen zwei Schließelemente 13, die an der Oberseite und an der Unterseite der Tür 8 angeordnet sind. Im vorliegenden Fall handelt es sich bei den Schließelementen 13 um eine ferromagnetische Kontaktfläche bzw. einen Blechstreifen aus Stahl oder Eisen, wobei das untere Schließelement 13 mit einem korrespondierenden Permanentmagneten 16 zusammenwirkt, wenn die Tür 8 geschlossen ist. Bei dem Pendant zu dem oberen Schließelement 13 handelt es sich ebenfalls aus einer ferromagnetische Kontaktfläche mit einem damit zusammenwirkenden Permanentmagneten 16.

Es kann dabei wie im Beispiel angedeutet um einen auf ein magnetisches Feld reagierenden Sensor 17 wirken, der dazu genutzt wird, den ordnungsgemäßen Schließzustand der Tür 8 zu sensieren. Analog hierzu ist an der Seite der Achse 12 im unteren Bereich der Innenseite der Tür 8 ein Kontaktgeber 14 vorhanden, der mit einem Mikroschalter 15 korrespondiert und ebenfalls der Sensierung der ordnungsgemäß verschlossenen Tür 8 dient. Da es sich bei der Tür 8 um eine Servicetür handelt, befinden sich hinter der Tür 8 verschiedene, für den Betrieb des Getränkebereiters 1 erforderliche Elemente, Einrichtungen und Aggregate. So ist hier beispielsweise ein Schlauch 18 erkennbar, wie er als Milchschlauch zum Einsatz kommen kann. Darüber hinaus ist bei geöffneter Tür 8 eine Brüheinheit 19 zugänglich, so dass diese Brüheinheit 19 erforderlichenfalls gereinigt oder aus dem Gerät herausgenommen werden kann. Weiterhin erlaubt die geöffnete Tür 8 einen Blick auf eine Schalteinheit 20, die hierbei technischen Wartungszwecken, wie Einstellungen dient.

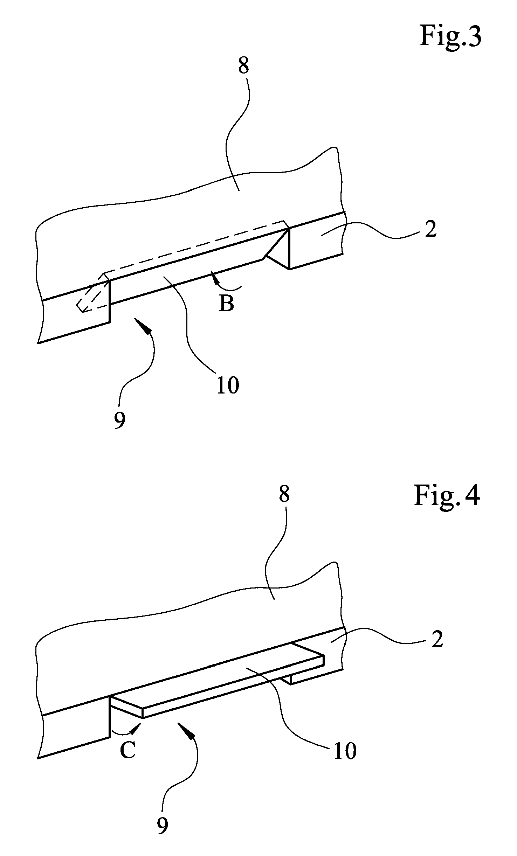

In den Figuren 3 und 4 sind zwei verschiedene Möglichkeiten der Anordnung einer Klappe 10 im Bereich der Griffmulde 9 dargestellt.

So zeigt die Figur 3 eine am Boden 2 angeordnete und nach innen schwenkbare Klappe 10. Die Schwenkrichtung zum Eingriff in die Griffmulde 9 ist durch den Pfeil "B" angedeutet. Die Klappe 10 schwenkt hierbei durch eine Feder belastet, selbsttätig in ihre Ausgangsstellung zurück, sobald der manuelle Eingriffe in die Griffmulde 9 beendet ist.

Die Figur 4 zeigt eine andere Möglichkeit, die Klappe 10 im Bereich des Bodens 2 anzubringen. Hier wurde die Klappe 10 als Abdeckung der Griffmulde 9 nach außen schwenkbar ausgeführt. Die Schwenkrichtung zum Eingriff in die Griffmulde 9 ist hierbei durch den Pfeil "C" veranschaulicht. Bei einer derartigen Anordnung der Klappe 10 kann diese gleichfalls als Tragegriff verwendet werden. Nach Gebrauch der Klappe 10 schwenkt diese vorzugsweise selbsttätig in ihre Ausgangsstellung zurück, wozu eine in der Figur 4 nicht erkennbare Feder dient.

### BEZUGSZEICHENLISTE:

- 1: Getränkebereiter
- 2: Boden
- 3: Verkleidungsteil
- 4: Verkleidungsteil
- 5: Verkleidungsteil
- 6: Verkleidungsteil
- 7: Verkleidungsteil
- 8: Tür
- 9: Griffmulde
- 10: Klappe
- 11: Standfuß
- 12: Achse
- 13: Schließelement, Blechstreifen
- 14: Kontaktgeber
- 15: Mikroschalter
- 16: Permanentmagnet
- 17: Sensor
- 18: Schlauch
- 19: Brüheinheit
- 20: Schalteinheit
- 21: Getränkeauslauf
- 22: Heißwasserdüse
- 23: Milchschlauch

## Patentansprüche

1. Getränkebereiter (1) in Form eines Standgerätes, mit einem auf einen Boden (2) aufgesetzten Gehäuse, das mehrere Verkleidungsteile (3, 4, 5, 6, 7, 8) und mindestens eine Tür aufweist, wobei
zumindest eines dieser Verkleidungsteile (3, 4, 5, 6, 7, 8) eine insgesamt als eine Tür ausgebildete Seitenwand (8) des Getränkebereiters (1) ist,
wobei die Tür (8) eine Servicetür ist und sich hinter der Tür (8) verschiedene, für den Betrieb des Getränkebereiters 1 erforderliche Elemente, Einrichtungen und Aggregate befinden, **dadurch gekennzeichnet, dass** die als Servicetür dienende Seitenwand (8) in vertikaler Richtung betrachtet, den Boden (2) zumindest teilweise verdeckend ausgeführt ist.

2. Getränkebereiter nach Anspruch 1,
**dadurch gekennzeichnet,**
**dass** die Innenseite der aus einem Kunststoff hergestellten und die gesamte Seitenwand des Getränkebereiters (1) bildenden Tür (8) zur Verstärkung mit einer wabenartigen Struktur ausgestattet ist.

3. Getränkebereiter nach Anspruch 1,
**dadurch gekennzeichnet, dass**
im Bereich der Seitenwände (8) zumindest auf zwei einander gegenüber liegenden Seiten des Bodens (2) je eine Griffmulde (9) in den Boden (2) eingebracht ist.

4. Getränkebereiter nach Anspruch 3,
**dadurch gekennzeichnet, dass**
die Griffmulden (9) durch je eine verschwenkbare Klappe (10) abgedeckt sind.

5. Getränkebereiter nach Anspruch 4,
**dadurch gekennzeichnet, dass**
die Klappen (10) nach innen oder nach außen verschwenkbar sind.

6. Getränkebereiter nach einem der Ansprüche 2 bis 4,
**dadurch gekennzeichnet, dass**
die Griffmulden (9) beziehungsweise die Klappen (10) als Tragegriffe ausgebildet sind.

7. Getränkebereiter nach Anspruch 6,
**dadurch gekennzeichnet, dass**
die als Tragegriffe ausgebildeten Griffmulden (9) oder Klappen (10) eine ergonomische Innenkontur aufweisen.

8. Getränkebereiter nach einem der Ansprüche 3 bis 7,
**dadurch gekennzeichnet, dass**
die Klappen (10) durch die Kraft wenigstens einer Feder selbsttätig in ihre Ausgangsstellung bewegbar ausgeführt sind.

9. Getränkebereiter nach einem der vorstehend genannten Ansprüche,
**dadurch gekennzeichnet, dass**
die Verkleidungsteile (3, 4, 5, 6, 7, 8) mit einer Lackoberfläche versehen sind.

10. Getränkebereiter nach einem der Ansprüche 3 bis 8,
**dadurch gekennzeichnet, dass**
die Klappen (10) mit einer zum Boden (2) und/oder zu den Verkleidungsteilen (3, 4, 5, 6, 7, 8) identischen Lackoberfläche versehen sind.

## Claims

1. Beverage maker (1) in the form of a free-standing appliance, comprising a housing which is placed on top of a base (2) and comprises a plurality of cover panel parts (3, 4, 5, 6, 7, 8) and at least one door,
at least one of said cover panel parts (3, 4, 5, 6, 7, 8) being a side wall (8) of the beverage maker (1), the whole of which is designed as a door,
the door (8) being a service door and various elements, devices and assemblies required for the beverage maker 1 to operate being located behind the door (8), **characterised in that** the side wall (8) which serves as a service door is designed to cover the base (2) at least in part when viewed in the vertical direction.

2. Beverage maker according to claim 1,
**characterised in that**
the inner side of the door (8), which is made of a plastics material and forms the entire side wall of the beverage maker (1), has a reinforcing honeycomb structure.

3. Beverage maker according to claim 1,
**characterised in that**,
in the region of the side walls (8), a recessed grip (9) is cut into the base (2) at least on two opposite sides of the base (2).

4. Beverage maker according to claim 3,
**characterised in that**
the recessed grips (9) are each covered by a pivotable flap (10).

5. Beverage maker according to claim 4,
**characterised in that**
the flaps (10) can be pivoted either inwards or outwards.

6. Beverage maker according to any of claims 2 to 4,
**characterised in that**
the recessed grips (9) or flaps (10) are formed as carrying grips.

7. Beverage maker according to claim 6,
**characterised in that**
the recessed grips (9) or flaps (10) which are designed as carrying grips have an ergonomic inner contour.

8. Beverage maker according to any of claims 3 to 7,
**characterised in that**
the flaps (10) are designed to be automatically movable into their initial position by the force of at least one spring.

9. Beverage maker according to any of the preceding claims,
**characterised in that**
the cover panel parts (3, 4, 5, 6, 7, 8) are provided with a painted surface.

10. Beverage maker according to any of claims 3 to 8,
**characterised in that**
the flaps (10) are provided with a painted surface which is identical to that of the base (2) and/or to that of the cover panel parts (3, 4, 5, 6, 7, 8).

## Revendications

1. Préparateur de boissons (1) sous la forme d'un appareil indépendant, avec un carter posé sur un fond (2), qui présente plusieurs parties d'habillage (3, 4, 5, 6, 7, 8) et au moins une porte,
au moins une de ces parties d'habillage (3, 4, 5, 6, 7, 8) étant une paroi latérale (8) du préparateur de boissons (1) constituée globalement en tant que porte,
la porte (8) étant une porte de service, et différents éléments, équipements et agrégats nécessaires au fonctionnement du préparateur de boissons (1) se trouvant derrière la porte (8),
**caractérisé en ce que**
la paroi latérale (8) servant de porte de service, vue dans la direction verticale, est réalisée d'une façon couvrant le fond (2) au moins partiellement.

2. Préparateur de boissons selon la revendication 1,
**caractérisé en ce que**
le côté interne de la porte (8) fabriquée en matière plastique et formant la totalité de la paroi latérale du préparateur de boissons (1) est équipé d'une structure en nid d'abeille pour le renforcement.

3. Préparateur de boissons selon la revendication 1,
**caractérisé en ce que**,
dans la zone des parois latérales (8), une cavité de prise (9) est respectivement mise en place dans le fond (2) au moins sur deux côtés du fond (2) opposés l'un à l'autre.

4. Préparateur de boissons selon la revendication 3,
**caractérisé en ce que**
les cavités de prise (9) sont couvertes par respectivement un volet (10) pivotant.

5. Préparateur de boissons selon la revendication 4,
**caractérisé en ce que**
les volets (10) peuvent pivoter vers l'intérieur ou vers l'extérieur.

6. Préparateur de boissons selon l'une des revendications 2 à 4,
**caractérisé en ce que**
les cavités de prise (9) ou respectivement les volets (10) sont constitués en tant que poignées de transport.

7. Préparateur de boissons selon la revendication 6,
**caractérisé en ce que**
les cavités de prise (9) ou volets (10) constitués en tant que poignées de transport présentent un contour interne ergonomique.

8. Préparateur de boissons selon l'une des revendications 3 à 7,
**caractérisé en ce que**
les volets (10) sont réalisés de façon à pouvoir se déplacer jusque dans leur position initiale automatiquement par la force d'au moins un ressort.

9. Préparateur de boissons selon l'une des revendications citées précédemment, **caractérisé en ce que**
les parties d'habillage (3, 4, 5, 6, 7, 8) sont munies d'une surface peinte.

10. Préparateur de boissons selon l'une des revendications 3 à 8,
**caractérisé en ce que**
les volets (10) sont munis d'une surface peinte identique au fond (2) et/ou aux parties d'habillage (3, 4, 5, 6, 7, 8).
